# FASCICULE DE BREVET EUROPEEN

(11) **EP 2 052 539 B1**
(45) Date de publication et mention de la délivrance du brevet: **16.11.2016**
(21) Numéro de dépôt: 07802621.8
(22) Date de dépôt: 15.08.2007
(51) Int. Cl.: H04N 21/258, H04L 9/08, H04L 29/06, H04N 21/4623

(54) **MÉTHODE DE RÉVOCATION DE MODULES DE SÉCURITÉ UTILISÉS POUR SÉCURISER DES MESSAGES DIFFUSÉS**
VERFAHREN FÜR DEN WIDERRUF VON SICHERHEITSMODULEN ZUR SICHERUNG VON RUNDFUNKNACHRICHTEN
METHOD OF REVOCATION OF SECURITY MODULES USED TO SECURE BROADCAST MESSAGES

(30) Priorité: 17.08.2006 EP 06119127
(43) Date de publication de la demande: 29.04.2009
(73) Titulaire: Nagravision S.A., 1033 Cheseaux-sur-Lausanne (CH)
(72) Inventeur: JUNOD, Pascal, 1302 Vufflens-la-Ville (CH)
(74) Mandataire: Leman Consulting S.A.
(86) Numéro de dépôt international: PCT/EP2007/058455
(87) Numéro de publication internationale: WO 2008/020041

(56) Documents cités:
- EP-A- 1 501 237
- WO-A2-01/56287
- GB-A- 2 419 262
- US-A1- 2002 133 701
- US-A1- 2004 114 762
- US-A1- 2004 120 529
- BONEH D ET AL: "AN EFFICIENT PUBLIC KEY TRAITOR TRACING SCHEME" ADVANCES IN CRYPTOLOGY. CRYPTO '99. 19TH ANNUAL INTERNATIONAL CRYPTOLOGY CONFERENCE. SANTA BARBARA, CA, AUG. 15 - 19, 1999. PROCEEDINGS, LECTURE NOTES IN COMPUTER SCIENCE ; VOL. 1666, BERLIN : SPRINGER, DE, 15 août 1999 (1999-08-15), pages 338-353, XP001194953 ISBN: 3-540-66347-9 cité dans la demande
- HALEVY D ET AL: "The LSD Broadcast Encryption Scheme" LECTURE NOTES IN COMPUTER SCIENCE, SPRINGER VERLAG, BERLIN, DE, vol. 2442, 2002, pages 47-60, XP002279256 ISSN: 0302-9743
- NAOR D ET AL: "Revocation and Tracing Schemes for Stateless Receivers" INTERNET CITATION, [Online] juillet 2001 (2001-07), XP002203174 Extrait de l'Internet: URL:http://eprint.iacr.org/2001/059.pdf> [extrait le 2002-07-24]

## Description

### Introduction

La présente invention concerne le domaine de la sécurité de modules de sécurité, ces modules étant destinés à contenir des informations personnelles et secrètes permettent l'accès à des services ou à des prestations.

Cette invention s'applique plus précisément au domaine de la télévision à péage, dans laquelle un contenu est diffusé sous forme chiffrée, le déchiffrement de ce contenu étant autorisé à des conditions déterminées.

### Etat de la technique

De façon bien connue, pour pouvoir visionner un événement de télévision à péage, tel qu'un film, un événement sportif ou un jeu notamment, plusieurs flux sont diffusés à destination d'une unité multimédia, par exemple d'un décodeur. Ces flux sont notamment d'une part le fichier de l'événement sous forme d'un flux de données chiffrées et d'autre part, un flux de messages de contrôle permettant le déchiffrement du flux de données. Le contenu du flux de données est chiffré par des "mots de contrôle" (Control words = cw), renouvelés régulièrement. Le deuxième flux est appelé flux ECM (Entitlement Control Message) et peut être formé de deux manières différentes. Selon une première manière, les mots de contrôle sont chiffrés par une clé, dite clé de transmission TK, qui est généralement propre au système de transmission entre le centre de gestion et un module de sécurité associé au récepteur/décodeur. Le mot de contrôle est obtenu en déchiffrant les messages de contrôle au moyen de la clé de transmission TK.

Selon une deuxième manière, le flux ECM ne contient pas directement les mots de contrôle chiffrés, mais contient des informations permettant de déterminer les mots de contrôle. Cette détermination des mots de contrôle peut se faire par différentes opérations, en particulier par déchiffrement, ce déchiffrement pouvant aboutir directement au mot de contrôle, ce qui correspond à la première manière décrite ci-dessus, mais le déchiffrement pouvant également aboutir à une donnée qui contient le mot de contrôle, celui-ci devant encore être extrait de la donnée. En particulier, la donnée peut contenir le mot de contrôle ainsi qu'une valeur associée au contenu à diffuser, et notamment les conditions d'accès à ce contenu. Une autre opération permettant la détermination du mot de contrôle peut utiliser par exemple une fonction de hachage à sens unique de cette information notamment.

Les opérations de sécurité sont généralement effectuées dans un module de sécurité associé à l'unité multimédia ou au décodeur. Un tel module de sécurité peut être réalisé en particulier selon quatre formes distinctes. L'une d'elles est une carte à microprocesseur, une carte à puce, ou plus généralement un module électronique (ayant une forme de clé, de badge,...). Un tel module est généralement amovible et connectable au décodeur. La forme avec contacts électriques est la plus utilisée, mais n'exclu pas une liaison sans contact par exemple de type ISO 14443.

Une deuxième forme connue est celle d'un boîtier de circuit intégré placé, généralement de façon définitive et inamovible dans le boîtier du décodeur. Une variante est constituée d'un circuit monté sur un socle ou connecteur tel qu'un connecteur de module SIM.

Dans une troisième forme, le module de sécurité est intégré dans un boîtier de circuit intégré ayant également une autre fonction, par exemple dans un module de désembrouillage du décodeur ou le microprocesseur du décodeur.

Dans une quatrième forme de réalisation, le module de sécurité n'est pas réalisé sous forme matérielle, mais sa fonction est mise en oeuvre sous forme uniquement logicielle. Etant donné que dans les quatre cas, bien que le niveau de sécurité diffère, la fonction est identique, on parlera de module de sécurité quelle que soit la manière de réaliser sa fonction ou la forme que peut prendre ce module.

Lors du déchiffrement d'un message de contrôle (ECM), il est vérifié, dans le module de sécurité, que le droit pour accéder au contenu considéré est présent. Ce droit peut être géré par des messages d'autorisation (EMM = Entitlement Management Message) qui chargent un tel droit dans le module de sécurité.

La diffusion de données numériques à accès conditionnel est schématiquement divisée en trois modules. Le premier module est en charge du chiffrement des données numériques par les mots de contrôle cw et de la diffusion de ces données.

Le deuxième module prépare les messages de contrôle ECM contenant les mots de contrôle cw, ainsi que les conditions d'accès et les diffuse à l'intention des utilisateurs.

Le troisième module quant à lui prépare et transmet les messages d'autorisation EMM qui sont en charge de définir les droits de réception dans les modules de sécurité connectés aux récepteurs.

Alors que les deux premiers modules sont généralement indépendants des destinataires, le troisième module gère l'ensemble des utilisateurs et diffuse des informations à l'intention d'un utilisateur, d'un groupe d'utilisateurs ou de tous les utilisateurs.

Une des méthodes pour contourner la sécurité, qui est certes lourde, mais réalisable, consiste à analyser le contenu d'un module de sécurité autorisé (reverse engineering) afin d'imiter la partie sécurité (déchiffrement des messages) tout en court-circuitant la partie vérification des droits. Il est ainsi possible de réaliser un "clone" d'un module de sécurité authentique. Un tel clone disposera donc de la clé de transmission, ce qui lui permettra de déchiffrer les mots de contrôle cw contenus dans les messages de contrôle ECM. Comme les droits ne sont pas vérifiés dans ce clone, il fonctionnera comme l'original pour ce qui concerne les moyens de déchiffrement sans pour autant qu'il soit nécessaire de disposer des droits pour réaliser ce déchiffrement.

Dans un système de télévision à péage, il est possible de changer de clé de transmission. Pour ceci, deux méthodes sont en principe utilisables. La première consiste à diffuser la nouvelle clé de transmission à destination de tous les décodeurs. Ceux-ci peuvent alors se mettre à jour de sorte que dès que la nouvelle clé est utilisée, ils peuvent déchiffrer les événements. Ce type de mise à jour ne permet pas d'exclure un décodeur cloné car il pourra recevoir également les messages de mise à jour puisqu'il dispose des clés de déchiffrement afférentes.

Du fait que chaque module de sécurité comprend au moins une clé unique, la deuxième approche consiste à transmettre la nouvelle clé de transmission dans un message crypté par cette clé unique. Dans ce cas, le nombre de messages est au minimum égal au nombre de modules de sécurité installés afin de renouveler individuellement cette clé de transmission. Il est connu que si un module est hors service, (c'est-à-dire si l'appareil hôte n'est pas alimenté), il ne recevra pas un tel message et ne pourra plus offrir à l'utilisateur les services auxquels il aurait légitiment droit une fois l'appareil hôte ré-enclenché. Pour pallier à cela, lors d'un envoi d'un message destiné à un module, ce message est répété un grand nombre de fois afin d'être sûr que son destinataire l'ait bien reçu.

Du fait de la bande passante limitée disponible et pour s'assurer que chaque abonné a bien reçu la nouvelle clé, il est nécessaire de transmettre le message bien avant que cette nouvelle clé ne soit utilisée, par exemple un mois à l'avance chaque message étant répété à des heures différentes de la journée.

Dès lors, le possesseur d'un module clone va s'adresser au technicien qui lui a fournit un tel clone et qui dispose de moyens pour extraire la nouvelle clé de transmission d'un module authentique. Une fois la clé mise à disposition, par exemple sur Internet, tous les clones peuvent alors être mis à jour avant même que la nouvelle clé ne soit activée. De cette manière, les clones restent toujours opérationnels.

Il en résulte que l'envoi de clés de transmission aussi bien par transmission globale qu'individuelle présentent des inconvénients et ne permettent pas d'éliminer un module cloné.

### Brève description de l'invention

Ainsi, le but de la présente invention est de proposer une méthode pour empêcher l'utilisation abusive de données à accès conditionnels, en particulier au moyen de clones de modules de sécurité dont la sécurité a été compromise.

Ce but est atteint par une méthode de révocation de modules de sécurité destinés à recevoir des messages de sécurité diffusés à une pluralité de modules de sécurité, ledit modules de sécurité comprenant au moins une clé personnelle, cette méthode comprenant les étapes, préalablement à la révocation :
- division de l'ensemble des modules de sécurité en au moins deux groupes,
- détermination, pour chaque groupe, d'une clé asymétrique comprenant une clé publique et une pluralité de clés privées différentes,
- chargement d'une clé privée par module de sécurité,
- préparation en vue de l'envoi d'un message de sécurité par groupe, ledit message étant encrypté par la clé publique dudit groupe;
la révocation consistant dans les étapes suivantes :
- envoi à chaque membre du même groupe que le module de sécurité à révoquer, à l'exception du ou des modules de sécurité à révoquer, d'une nouvelle clé privée correspondant à la clé publique d'un autre groupe, chaque clé privée étant encryptée par la clé personnelle dudit module de sécurité.

Un exemple de génération des clés asymétriques de groupe utilise le système de Boneh-Franklin (Dan Boneh, Matthew K. Franklin: An Efficient Public Key Traitor Tracing Scheme. CRYPTO 1999: 338-353). Pour une clé publique, il est possible de générer une pluralité de clés privées, chacune permettant de décrypter le message encrypté par la clé publique.

Ceci nous permet de placer une clé différente dans chaque module de sécurité tout en envoyant un nombre limité de messages différents.

### Brève description des figures

L'invention sera mieux comprise grâce à la description détaillée qui va suivre et qui se réfère aux dessins annexés qui sont donnés à titre d'exemple nullement limitatif, dans lesquels :
- la figure 1 illustre schématiquement un émetteur et un récepteur de télévision à péage,
- la figure 2 illustre la répartition en 4 groupes comprenant chacun 3 modules de sécurité,
- la figure 3 illustre la répartition des groupes après la révocation d'un module de sécurité.

### Description détaillée

Dans le domaine de la diffusion de messages de sécurité, préparé et envoyé depuis un centre de gestion CG à une pluralité d'unité multimédia STB, on doit faire face au compromis de l'adressage global, soit le même message pour toutes les unités, ou l'adressage individuel, soit un message pour chaque unité.

Dans le premier cas, le système est rapide car un seul message permet par exemple de changer la clé de transmission. Cette clé est celle qui encrypte les messages contenant les mots de contrôle CW.

On imagine les conséquences du second cas s'il faut régulièrement transmettre des informations à chaque module de sécurité.

C'est pourquoi la solution selon l'invention est de diviser l'ensemble des modules de sécurité en groupes, chaque groupe pouvant contenir plusieurs centaines de modules. Selon une variante, chaque groupe comprend 256 membres. De ce fait, 1 million d'abonnés représente env. 4000 groupes, donc 4000 messages pour renouveler la clé de transmission ou mettre à jour un programme de sécurité.

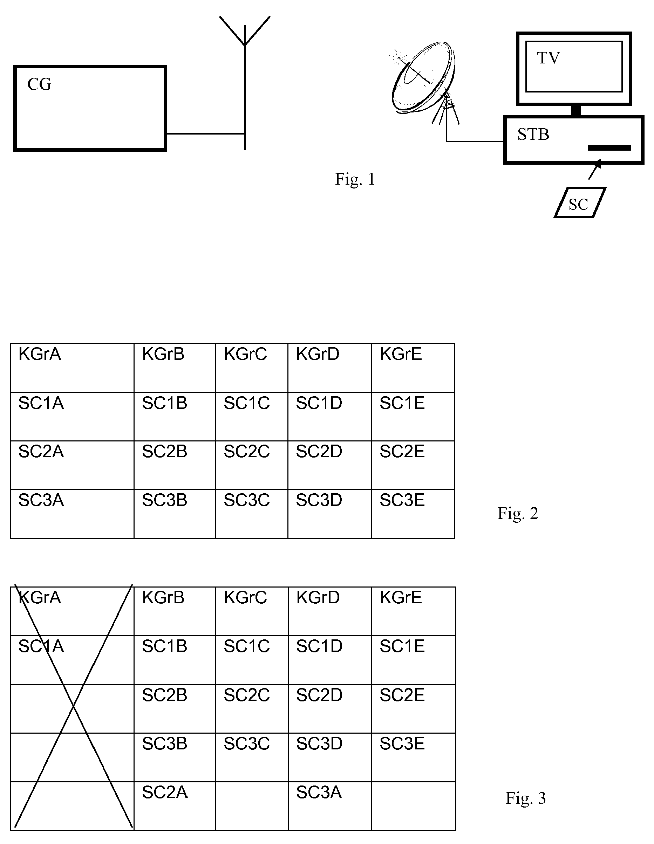

Le centre de gestion CG envoie les messages de sécurité à destination des unités multimédia STB. Ces unités STB comprennent des moyens de sécurité SC, illustrés sur la figure 1 par une carte à puce enfichable.

Lors de la personnalisation d'un tel module de sécurité, on y place des clés secrètes propres à chaque module. Chaque module de sécurité porte un numéro d'identification UA qui permettra de tracer les clés secrètes introduites dans un module.

Le centre de gestion CG dispose d'une base de données avec pour chaque module de sécurité, la liste des clés personnelles.

La mise en groupe peut se faire soit à la personnalisation du module (en général avant la livraison) ou lors de la mise en route sur site. Selon notre invention, une clé ou une information est nécessaire pour accéder aux services contrôlés par le centre de gestion. Ceci peut être une étape supplémentaire et indépendante à la gestion des droits. Le fait que la clé ou l'information soit accessible à tous les modules de sécurité ne signifie pas que les services soient accessibles aux abonnés disposant de ces modules de sécurité.

Comme indiqué précédemment, un module de sécurité est assigné à un groupe, par exemple le groupe GrA. Cette assignation peut se faire soit lors de l'initialisation du module, soit par l'envoi de la clé privée personnelle correspondant au groupe GrA. L'envoi de cette clé est sécurisé par l'encryption de ladite clé par une des clés personnelles du module de sécurité. Selon l'exemple de la figure 2, les modules de sécurité SC1A, SC2A et SC3A font partie de ce groupe GrA. Les informations secrètes sont encryptées par la clé KGrA dans le centre de gestion CG et déchiffrées grâce à chaque clé privée dans les modules de sécurité.

De la même manière, d'autres groupes GrB, GrC ou GrD comprennent également des modules de sécurité SC..B, SC..C ou SC..D.

Ainsi, l'ensemble des modules de sécurité reçoit les informations secrètes nécessaires au bon fonctionnement du système d'accès conditionnel par l'envoi d'autant de messages différents qu'il y a de groupe. Il est à noter que ceci n'exclu pas la répétition des messages dans le cas ou les décodeurs ne disposent pas de voie de retour. Le centre de gestion répétera les messages selon une fréquence convenue, par exemple 1 fois par jour à des heures choisies aléatoirement.

Lors de la détection d'un clone de module de sécurité, par exemple si un tel module a été compromis par l'extraction des clés, la clé privée personnelle va se retrouver dans tous les clones.

Une fois un clone connu, il est possible de déterminer quel est le module de sécurité qui a été compromis par la comparaison de la clé privée de ce module clone avec les clés privées stockées dans le centre de gestion. Le centre de gestion garde une copie de la clé privée chargée dans chaque module de sécurité. Selon notre exemple, le module à révoquer est le module SC1A. Le groupe GrA va donc disparaître car il n'est plus possible d'envoyer des messages secrets encrypté par la clé publique KGrA. Avant de stopper l'envoi des messages encryptés par la clé de groupe KGrA, tous les modules de sécurité, à l'exception du module de sécurité corrompus, vont devoir changer de groupe.

Dans l'exemple de la figure 3, le module de sécurité SC2A est déplacé dans le groupe B, le module SC2A est déplacé dans le groupe D. Cette opération se fait par l'envoi de la clé de groupe de sa nouvelle affectation. Cette clé de groupe est encryptée par une clé personnelle du module de sécurité afin que ce message ne puisse être interprété que par le module de sécurité concerné. Une fois que le groupe compromis est vidé de ses membres non corrompus, l'envoi des messages avec la clé du groupe A est interrompu. A ce moment, tous les clones cessent d'être opérationnels car ne pouvant plus recevoir les informations secrètes.

Le déplacement des membres non révoqués vers d'autres groupes peut de faire soit vers des groupes existants, soit par la création d'un nouveau groupe.

L'appartenance à un groupe se fait comme indiqué par la présence d'une clé privée unique généré dans un système à clé asymétrique à clés privées multiple. Selon un mode de réalisation, un identifiant de groupe est également joint afin de filtrer les messages relatifs à ce groupe des autres messages. Les informations secrètes sont encryptées par la clé publique du dit groupe, à cela on y ajoute l'identifiant de groupe. Ceci évite de décrypter le message et réaliser que son contenu est aléatoire car ce n'est pas la bonne clé qui a été utilisée. L'identifiant est de préférence testé par l'appareil hôte que a reçu cette information de la part du module de sécurité. Un message n'est transmis au module de sécurité que s'il contient l'identifiant du module de sécurité.

Les informations secrètes peuvent prendre plusieurs formes et sont transmises par un message de sécurité. Le document WO0156287 décrit une méthode pour combiner des informations pour l'obtention du mot de contrôle. Les informations secrètes pourraient être soit le mot de contrôle maître qui sera combiné avec les mots de contrôle CW contenus dans les messages de contrôle, soit la clé pour décrypter le message contenant le mot de contrôle maître.

Une autre forme de réalisation, les informations secrètes représentent la clé de transmission. Cette clé sert à décrypter les messages de contrôle ECM et d'en extraire les mots de contrôle. Cette clé de transmission est par exemple changée tous les mois.

Dans la pratique, lors d'un changement de clé de transmission par exemple, l'envoi de la nouvelle clé à tous les modules de sécurité peut prendre du temps. Les modules de sécurité vont donc disposer de deux informations secrètes, l'une courante et l'autre prête à prendre le relais. Dans le cas de la clé de transmission, l'entête du message de contrôle va contenir une indication permettant de savoir quel est la clé de transmission à utiliser. Un système simple est de définir une clé de transmission paire et une clé de transmission impaire. Le message de contrôle ECM contiendra un bit pour définir la parité et donc la clé à utiliser.

Afin d'éviter de donner du temps à des tiers malveillants pour retrouver l'information secrète, il est prévu selon l'invention, d'encrypter l'information secrète par une clé de libération. Cette clé est globale et utilisée quelque soit le groupe du module de sécurité. Ainsi chaque module de sécurité va recevoir un message encrypté par la clé de son groupe et encrypté par une clé globale. L'inverse est également possible à savoir que les informations secrètes sont encryptées par la clé globale puis par la clé de groupe.

Peu avant la mise en service de l'information secrète, par exemple la clé de transmission, le centre de gestion CG envoie un message, contenant la clé globale, encrypté selon l'un des modes décris ci-dessus. A ce moment, chaque module sera capable de disposer de l'information secrète lui permettant de traiter les informations de sécurité correspondante.

## Revendications

1. Méthode de révocation de modules de sécurité destinés à recevoir des messages de sécurité diffusés à une pluralité de modules de sécurité, ledit module de sécurité comprenant au moins une clé personnelles, cette méthode comprenant les étapes, préalablement à la révocation :
- division de l'ensemble des modules de sécurité en au moins deux groupes,
- détermination, pour chaque groupe, d'une clé asymétrique comprenant une clé publique et une pluralité de clés privées différentes permettant de décrypter un message encrypté par la clé publique,
- chargement d'une desdites clés privées par module de sécurité, chaque module recevant une clé privée différente, lesdites clés privées correspondant à la clé publique dudit groupe,
- transmission d'un message de sécurité par groupe, ledit message étant encrypté par la clé publique dudit groupe;
la révocation consistant dans les étapes suivante
- envoi à chaque membre du même groupe que le module de sécurité à révoquer, à l'exception du ou des modules de sécurité à révoquer, d'une nouvelle clé privée correspondant à la clé publique d'un autre groupe, chaque clé privée étant encryptée par la clé personnelle dudit module de sécurité, **caractérisée en ce que** les modules de sécurité contiennent une clé commune, **en ce que** le contenu du message de sécurité est surencrypté par une clé de libération, ladite clé de libération est encryptée par la clé commune des modules de sécurité et est transmise peu avant la mise en service du contenu du message de sécurité.

2. Méthode de révocation selon la revendication 1, utilisée dans un système de télévision à péage dans lequel le flux de données audio/vidéo est encryptée par des mots de contrôle (CW), ces derniers étant transmis dans des messages de contrôle (ECM), lesdits messages étant encryptés par une clé de transmission, **caractérisée en ce que** le message de sécurité contient la clé de transmission nécessaire au déchiffrement des messages de contrôle (ECM).

3. Méthode de révocation selon la revendication 1, utilisée dans un système de télévision à péage dans lequel le flux de données audio/vidéo est encrypté par des mots de contrôle (CW), ces derniers étant transmis dans des messages de contrôle (ECM), lesdits messages étant encryptés par une clé de transmission, **caractérisée en ce que** le message de sécurité contient une clé de surchiffrement des mots de contrôle (CW).

4. Méthode de révocation selon la revendication 1, **caractérisée en ce que** le message de sécurité contient des mises à jour du logiciel dudit module de sécurité,

5. Méthode de révocation selon les revendications 1 à 4, **caractérisée en ce que** les membres d'un groupe révoqué sont réassignés à des groupes existants différents, à l'exception du ou des modules de sécurité à révoquer.

6. Méthode de révocation selon les revendications 1 à 4, **caractérisée en ce que** les membres d'un groupe révoqué sont réassignés à un nouveau groupe, à l'exception du ou des modules de sécurité à révoquer.

## Patentansprüche

1. Verfahren für den Widerruf von Sicherheitsmodulen, um Sicherheitsmitteilungen zu empfangen, die an eine Vielzahl von Sicherheitsmodulen ausgestrahlt werden, wobei das Sicherheitsmodul mindestens einen persönlichen Schlüssel umfasst und dieses Verfahren folgende Phasen umfasst, vor dem Widerruf:
- Unterteilung aller Sicherheitsmodule in mindestens zwei Gruppen,
- Ermittlung, für jede Gruppe, eines asymmetrischen Schlüssels, der einen öffentlichen Schlüssel umfasst und eine Vielzahl von verschiedenen privaten Schlüsseln, wodurch es möglich wird, eine verschlüsselte Nachricht mittels des öffentlichen Schlüssels zu entschlüsseln,
- Laden eines der besagten privaten Schlüssel pro Sicherheitsmodul, wobei jedes Modul einen anderen privaten Schlüssel bekommt und die privaten Schlüssel dem öffentlichen Schlüssel der genannten Gruppe entsprechen,
- Übertragung von einer Sicherheitsmitteilung pro Gruppe, die mit dem öffentlichen Schlüssel der genannten Gruppe verschlüsselt ist;
wobei der Widerruf aus den folgenden Schritten besteht:
- Sendung, an jedes Mitglied derselben Gruppe wie das zu widerrufende Sicherheitsmodul, mit Ausnahme des oder der zu widerrufenden Sicherheitsmodule, eines neuen privaten Schlüssels, der dem öffentlichen Schlüssel einer anderer Gruppe entspricht, wobei jeder private Schlüssel durch den persönlichen Schlüssel des genannten Sicherheitsmoduls verschlüsselt ist, **gekennzeichnet dadurch, dass** die Sicherheitsmodule einen gemeinsamen Schlüssel enthalten, dadurch dass der Inhalt der Sicherheitsmitteilung durch einen Freigabeschlüssel verschlüsselt wird, wobei der Freigabeschlüssel durch den gemeinsamen Schlüssel der Sicherheitsmodule verschlüsselt ist und kurz vor dem Einsatz des Inhalts der Sicherheitsmitteilung übertragen wird.

2. Widerrufverfahren nach Anspruch 1, das in einem System des Bezahlfernsehens benutzt wird, bei dem der Audio-/Videodatenstrom durch Kontrollwörter (CW) verschlüsselt ist, wobei letztere in Kontrollmitteilungen (ECM) übertragen werden, die von einem Übertragungsschlüssel verschlüsselt sind, **gekennzeichnet dadurch, dass** die Sicherheitsmitteilung den nötigen Übertragungsschlüssel für die Entschlüsselung der Kontrollmitteilungen (ECM) enthält.

3. Widerrufverfahren nach Anspruch 1, das in einem System des Bezahlfernsehens benutzt wird, bei dem der Audio-/Videodatenstrom durch Kontrollwörter (CW) verschlüsselt ist, wobei letztere in Kontrollmitteilungen (ECM) übertragen werden, die von einem Übertragungsschlüssel verschlüsselt sind, **gekennzeichnet dadurch, dass** die Sicherheitsmitteilung einen Verschlüsselungsschlüssel für die Kontrollwörter (CW) enthält.

4. Widerrufverfahren nach Anspruch 1, **gekennzeichnet dadurch, dass** die Sicherheitsmitteilung Aktualisierungen der Software des Sicherheitsmoduls enthält.

5. Widerrufverfahren nach den Ansprüchen 1 bis 4, **gekennzeichnet dadurch, dass** die Mitglieder einer widerrufenen Gruppe verschiedenen existierenden Gruppen zugewiesen werden, mit Ausnahme des oder der zu widerrufenden Sicherheitsmodule.

6. Widerrufverfahren nach den Ansprüchen 1 bis 4, gekennzeichnet, dass die Mitglieder einer widerrufenen Gruppe einer neuen Gruppe zugewiesen werden, mit Ausnahme des oder der zu widerrufenden Sicherheitsmodule.

## Claims

1. Revocation method of security modules intended to receive security messages broadcasted to a plurality of security modules, said security module comprising at least one personal key, this method comprising the steps, prior to revocation:
- division of the set of security module into at least two groups,
- determination of an asymmetrical key for each group comprising a public key and a plurality of different private keys,
- loading of one private key per security module, each module receiving a different private key, said private keys corresponding to the public key of said group,
- transmission of one security message per group, said message being encrypted by the public key of said group;
the revocation consisting in the following steps:
- sending to each member of the same group as the security module to be revoked, with the exception of the security module(s) to be revoked, of a new private key corresponding to the public key of another group, each private key being encrypted by the personal key of said security module, **characterised in that** the security modules contain a common key, and **in that** the content of the security message is over-encrypted by a release key, said release key is encrypted by the common key and transmitted shortly before the use of the content of the security message.

2. Revocation method according to claim 1 used in a Pay-TV system in which the audio/video data stream is encrypted by control-words (CW), the latter being transmitted in control messages (ECM), said messages being encrypted by a transmission key, **characterised in that** the security message contains the transmission key necessary for the deciphering of the control messages (ECM).

3. Revocation method according to claim 1 used in a Pay-TV system in which the audio/video data stream is encrypted by control-words (CW), the latter being transmitted in control messages (ECM), said messages being encrypted by a transmission key, **characterised in that** the security message contains a master encryption key of the control-words (CW).

4. Revocation method according to claim 1, **characterised in that** the security message contains updates of the software of said security module.

5. Revocation method according to claims 1 to 4, **characterised in that** the members of a revoked group are reassigned to different existing groups, with the exception of the security module(s) to be revoked.

6. Revocation method according to claims 1 to 4, **characterised in that** the members of a revoked group are reassigned to a new group, with the exception of the security module(s) to be revoked.
